# EUROPEAN PATENT SPECIFICATION

(11) **EP 1 747 513 B1**
(45) Date of publication and mention of the grant of the patent: **31.03.2010**
(21) Application number: 05741218.1
(22) Date of filing: 29.04.2005
(51) Int. Cl.: G06F 15/78, G06F 9/445, H04N 5/14

(54) **HIERARCHICAL PROCESSOR ARCHITECTURE FOR VIDEO PROCESSING**
HIERARCHISCHE PROZESSORARCHITEKTUR ZUR VIDEOVERARBEITUNG
ARCHITECTURE DE PROCESSEUR HIERARCHIQUE POUR TRAITEMENT VIDEO

(30) Priority: 20.05.2004 US 850095
(43) Date of publication of application: 31.01.2007
(73) Proprietor: Intel Corporation, Santa Clara, CA 95052 (US)
(72) Inventor: LIPPINCOTT, Louis, Los Altos, CA 94024 (US)
(74) Representative: Hutchinson, Glenn Stanley
(86) International application number: PCT/US2005/015130
(87) International publication number: WO 2005/116853

(56) References cited:
- EP-A- 1 414 014
- WO-A-99/15983
- US-B1- 6 237 029
- GAY-BELLILE O ET AL: "A reconfigureable superimposed 2D-mesh array for channel equalization" ISCAS 2002. PROCEEDINGS OF THE 2002 IEEE INTERNATIONAL SYMPOSIUM ON CIRCUITS AND SYSTEMS. SCOTTSDALE, AZ, MAY 26 - 29, 2002, IEEE INTERNATIONAL SYMPOSIUM ON CIRCUITS AND SYSTEMS, NEW YORK, NY : IEEE, US, vol. VOL. 1 OF 5, 26 May 2002 (2002-05-26), pages I-893, XP002273540 ISBN: 0-7803-7448-7
- BINGFENG MEI ET AL: "Design methodology for a tightly coupled WLIW/reconfigurable matrix architecture: a case study" DESIGN, AUTOMATION AND TEST IN EUROPE CONFERENCE AND EXHIBITION, 2004. PROCEEDINGS FEB. 16-20, 2004, PISCATAWAY, NJ, USA,IEEE, vol. 2, 16 February 2004 (2004-02-16), pages 1224-1229, XP010684826 ISBN: 0-7695-2085-5

## Description

### BACKGROUND

Implementations of the claimed invention generally may relate to information processing and, more particularly, to processing received video information.

Certain types of processing tasks may involve both complex algorithms and a significant amount of data to be processed. Decoding, and/or encoding, of video information may be one such processing task. For example, different interlacing schemes, frame types, orderings, etc. of video information may present algorithmic complexity to a processor handling an incoming stream of video. A somewhat high frame rate and/or number of pixels per frame may also present a significant amount of data to be processed (e.g., computational load).

One way to handle such processing tasks may be to use a processor that can handle the logically complex tasks and still be fast/capable enough to handle significant amounts of data. Such an approach, however, may involve a relatively large, complex processor operating at a relatively fast clock frequency. Large, complex processors that operate at relatively fast clock frequencies may dissipate relatively high amounts of power.
EP1414014 describes a method for operating a filter module in a video display network comprising determining a picture type, display type and operation of the display network. The method further comprises determining, in real time, a filter configuration from a plurality of possible filter configurations based on the determined picture type, display type and operation.
Gay-Bellile et al, "A reconfigureable superimposed 2D-mesh array for channel equalization," IEEE 2002, ISBN 0-7803-7448-7, describes a scalable and reconfigureable mesh array of programmable processing elements designed to implement multi-standard channel estimation and equalization algorithms for broadcast digital television applications.
Gay-Bellile O; "Array processing for channel equalization"; 2002 IEEE International Conference on Acoustics, Speech, and Signal Processing; Orlando, FL, 13-17 May 2002" discloses an array of primitive programmable processors. Cell programs are defined at an assembly language stage and associated with individual cells.
BINGFENG MEI ET AL: "Design methodology for a tightly coupled WLIW/reconfigurable matrix architecture: a case study" DESIGN, AUTOMATION AND TEST IN EUROPE CONFERENCE AND EXHIBITION, 2004. PROCEEDINGS FEB. 16-20, 2004, PISCATAWAY, NJ, USA,IEEE, vol. 2, 16 February 2004 (2004-02-16) , pages 1224-1229, ISBN: 0-7695-2085-5 discloses a system for decoding video frames, namely MPEG-2 frames. The system consists of a processor which is coupled through its register.file to a plurality of reconfigurable cells. For each new incoming frame the reconfigurable cells are reconfigured, based on the type of the frame (I-, P- or B-frame). After the reconfiguration, the frame is decoded by the processor in cooperation with the reconfigurable cells. Cooperation means in this case, that an algorithm for decoding a certain frame type is split into a control part (i.e. branches, jumps, etc.) and into several kernel parts (i.e. loops comprising arithmetic-logic-instructions), wherein the processor executes the control part and each of the reconfigurable cells executes one or more of the several kernels.
US 5,522,083 discloses a reconfigurable multi-processor suitable for operating in an SIMD or MIMD mode.
The above problem is solved according to the independent claims.

### BRIEF DESCRIPTION OF THE DRAWINGS

The accompanying drawings, which are incorporated in and constitute a part of this specification, illustrate one or more implementations consistent with the principles of the invention and, together with the description, explain such implementations. The drawings are not necessarily to scale, the emphasis instead being placed upon illustrating the principles of the invention. In the drawings,

Fig. 1 illustrates an example system;

Fig. 2 is a flow chart illustrating a process of operating on data;

Fig. 3 is an example video processing algorithm;

Fig. 4 illustrates how the system of Fig. 1 may implement the algorithm of Fig. 3; and

Fig. 5 illustrates how various programs in Fig. 4 may be stored in a memory.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of the claimed invention. However, it will be apparent to those skilled in the art having the benefit of the present disclosure that the various aspects of the invention claimed may be practiced in other examples that depart from these specific details. In certain instances, descriptions of well known devices, circuits, and methods are omitted so as not to obscure the description of the present invention with unnecessary detail.

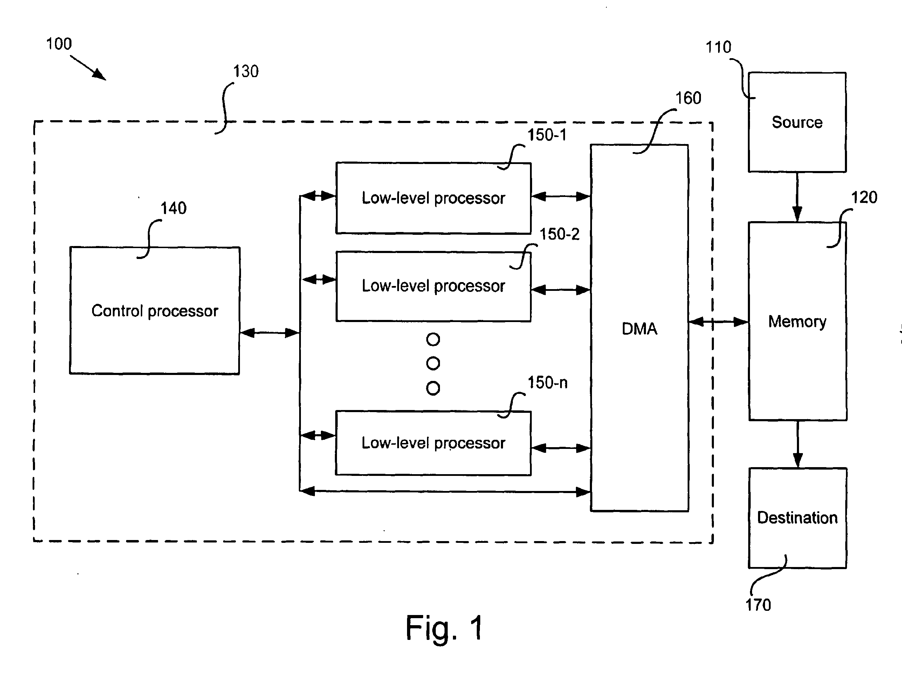

Fig. 1 illustrates an example system 100. Example implementations of system 100 may include personal video recorders (PVRs) or digital versatile disc recorders (DVD-Rs), although the claimed invention is not limited in this regard. For example, system 100 may be embodied within a general-purpose computer, a portable device, a consumer electronics device, or another electrical system. Although system 100 may be embodied in a single device, in some implementations certain components of system 100 may be remote and/or physically separated from other components of system 100. Further, although system 100 is illustrated as including discrete components, these components may be implemented in hardware, software/firmware, or some combination thereof. When implemented in hardware, some components of system 100 may be combined in a certain chip or device.

System 100 may include a data source 110, a memory 120, a data processor 130, and a data destination 170. Source 110 may send data to memory 120, and the data in memory 120 may be processed by data processor 130. The processed data may be sent to destination 170. For the purposes of explanation, the data sent and operated upon may include media data (e.g., video information), but the claimed invention is not limited in this regard. Data processor 130 may process other types of data than media information consistent with the description herein.

Source 110 may include a device that provides media information to the remainder of system 100. The media information provided by source 110 may include video information encoded in a format such as MPEG-1, MPEG-2, MPEG-4, H.264, Windows Media Video version 9 (WMV9) and Advanced Video System (AVS) formats. The claimed invention is not limited to the formats specifically mentioned herein; rather any now-known or later-developed media format may be used in accordance with the schemes disclosed herein.

In some implementations, source 110 may include a tuner to separate a stream or channel of video information (e.g., high definition (HD) MPEG-2 information) from other streams or channels of media information. In some implementations, source 110 may include a reader to read the media information from a storage medium. For example, such a reader may include an optical, magnetic, and/or electrical reader to extract the video information from a DVD, hard disk, semiconductor storage device, or other storage medium.

In some implementations, source 110 may include receiver circuitry to receive the media information from a communication link (not shown). Such receiver in source 110 may be arranged to receive information from a wired, optical, or wireless transmission medium. The receiver in source 110 may, or may not, operate in conjunction with a tuner or other device to separate desired information from other received information.

Memory 120 may receive media information from source 110 and store the media information. If instructed by data processor 130, memory 120 may provide processed media data to destination 170 and/or destination 170 may read such processed media data when triggered by data processor 130. Memory 120 may include random access memory (RAM) to facilitate rapid transfer and storage of data. Such RAM may be synchronous, asynchronous, double data rate (DDR), etc. according to the design parameters of system 100.

In addition to storing media data, memory 120 may store instructions for use by data processor 130 and/or its components. Such instructions may be task-specific, and may be provided to data processor 130 when requested. Memory 120 may include one or more sets of such instructions that, when loaded by data processor 130, enable data processor 130 to perform a variety of processing tasks on the data (e.g., media or video data) received from source 110.

Data processor 130 may include a control processor 140, a number of low-level processors 150-1, 150-2, ..., 150-n (collectively "low-level processors 150"), and a direct memory access (DMA) 160. In some implementations, all of elements 130-160 may be located in the same chip or package. In some implementations, however, low level processors 150 and DMA 160 may be in one chip or package, while control processor 140 may be located in a separate chip or package. Other combinations and implementations are possible.

Control processor 140 may include sufficient instruction memory to control and/or coordinate a relatively complex processing operation. In handling such a complex operation (e.g., decoding video information), control processor may both determine what resources are needed for the task (e.g., by parsing an algorithm such as a decoding algorithm) and allocate resources to the task (e.g., by configuring low-level processors 150 appropriately). In this latter, allocation function, control processor 140 may be arranged to load task-specific instructions from memory 120 into low-level processors 150.

Some processing operations may be "data-driven" (e.g., defined by the data from source 110), and control processor 140 may examine indicator data to determine what type of processing should be performed. Control processor 140 may then configure low-level processors 150 with appropriate instructions from memory 120 to process the data from source 110 that follows the indicator data. Control processor 140 may also assign certain ones of low-level processors 150 to process certain data and/or perform certain tasks in parallel. Control processor 140 may reconfigure low-level processors 150, as needed, based on newly received indicator data. This control scheme will be described in greater detail below.

For processing tasks that involve logically complex tasks and relatively large amounts of data, control processor 140 may handle the logical complexity and may configure low-level processors 150 "on the fly," if desired, to handle the amounts of data. To accomplish these functions, control processor 140 may have room in its instruction memory for more than about ten times the number of instructions (e.g., be at least ten times larger than) as low-level processors 150. In one implementation, control processor 140 may have about 32 kilobytes (KB) of instruction RAM, although the claimed invention is not limited in this regard.

Low-level processors 150 may include a number of processors with smaller amounts of instruction memory (e.g., less than a tenth as much) than control processor 140. In one implementation, low-level processors 150 each may have about 1.5 kilobytes (KB) of instruction RAM, although the claimed invention is not limited in this regard. Because of the smaller amounts of instruction memory, each of low-level processors 150 may perform a task corresponding to a relatively small code size. Low-level processors 150 also may lack, for example, one or more of caches, deep pipelines, branch prediction, speculative execution, etc. The relatively small memory and relatively simple structure of low-level processors 150, however, may result in power and size savings relative to more complex processors. In some implementations, low-level processors 150 may be homogeneous in structure and capability, and in some implementations, low-level processors 150 may be heterogeneous in structure and/or capability.

Although not explicitly illustrated in Fig. 1 for simplicity of explanation, low-level processors 150 may be interconnected in some implementations, for example, in a matrix-type arrangement where one of low-level processors 150 may be connected to one, two, three, or more others of low-level processors 150. In some implementations, there may be a single digit number of low-level processors 150 (e.g., four or eight), but in other implementations there may be a double-digit number of low-level processors 150 (e.g., 16, 20, 32, 40, etc.). Also, though low-level processors 150 will be described as executing a processing task, in some implementations each of low-level processors 150 may execute a sub-task in conjunction with one or more of low-level processors 150. Other architectural and processing flow variations are both possible and contemplated for low-level processors 150.

In any event, low-level processors 150 may receive instructions from memory 120 and data to process using those instructions in based on direction from control processor 140. Depending on the instructions received, each of low-level processors 150 may be arranged to be a specific-purpose processor, with different processing tasks possible among the processors. Low-level processors 150 may be arranged to retrieve and process their respective data, possibly in parallel. Further, any one of low-level processors 150 may be reconfigured (e.g., receive different instructions) as often as upon completion of its current task. Control processor 140 may, however, re-use (i.e., not reconfigure) some of low-level processors 150 if they are already configured for tasks that need to be performed. Because of configuration of low-level processors 150 by control processor 140, data processor 130 may be referred to as a hierarchical processor.

DMA 160 may read and/or write data from and/or to memory 120. In so doing, DMA 160 may facilitate control processor 140 reading indicator data from source 110. DMA 160 may also provide instruction data and data to be processed to low-level processors 150. DMA 160 also may control data flow among low-level processors 150. Although DMA 160 is illustrated as connected to memory 120 with a single connection, it should be understood that such merely shows bi-directional data transfer between DMA 160 and memory 120, and does not limit the claimed invention. In practice, one or more additional (e.g., control) connections may exist between DMA 160 and memory 120, even though not explicitly shown in Fig. 1. This illustrative principle also applies to other connections shown in Fig. 1.

Data destination 170 may be arranged to store or output processed data (e.g., decoded media or video information). In some implementations, destination 170 may include an output interface to provide another system or another component of system 100 (not shown) access to the data processed by data processor 130. Such a physical output interface may be optical, electrical, wireless, etc., and may conform to one or more existing or later-developed interface specifications for transmitting and/or accessing data.

In some implementations, destination 170 may include a storage device for storing the processed data. For example, destination 170 may include a hard disk or flash memory to store information. In some implementations, destination 170 may include a writeable optical drive (e.g., DVD-RW, etc.) to transfer processed information to a portable storage medium. A display processor (not shown) may access the stored information in destination 170 for playback or some other purpose at a later time.

Although several exemplary implementations have been discussed for destination 170, the claimed invention should not be limited to those explicitly mentioned, but instead should encompass any device or interface capable of transmitting or storing the processed information from memory 120. For example, destination 170 need not necessarily be separate or distinct from source 110 in some implementations. Decoded video information, in some implementations, may be re-inserted (e.g., by back modulation in another channel) into a stream from which it was received.

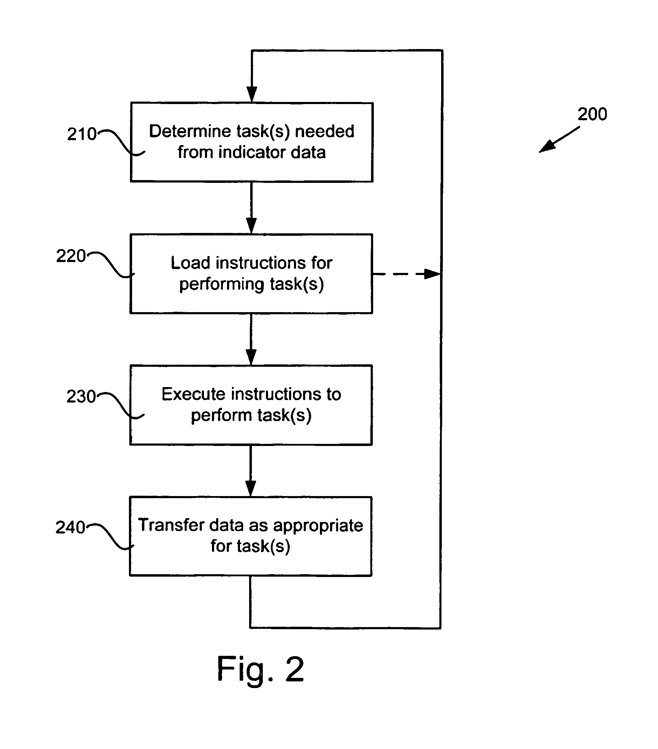

Fig. 2 is a flow chart illustrating a process 200 of operating on data. Although process 200 may be described with regard to system 100 for ease of explanation, the claimed invention is not limited in this regard. Processing may begin with control processor 140 reading indicator data from memory 120 and determining one or more tasks to be performed based on the indicator data [act 210]. Control processor 140 may make such determination using instructions (e.g., forming an algorithm) resident in its instruction memory. In one example, described in greater detail below, control processor 140 may execute a decoding algorithm for video data, and the indicator data used may be, for example, what type of encoding a particular frame of video data has.

Processing may continue with control processor 140 arranging for instructions for performing the one or more tasks to be loaded into one or more of low-level processors 150 [act 220]. In some implementations, control processor 140 may instruct DMA 160 to access appropriate instructions (e.g., micro-code program(s)) in memory 120 and pass them along to low-level processors 150. In some implementations, control processor 140 may instruct low-level processors 150 to obtain the instructions from memory 120 via DMA 160. As long as the indicator data precedes other data to be processed, control processor 140 may load instructions into low-level processors 150 with relatively low delay or latency.

Low-level processors 150 that have received instructions may execute the instructions to perform the one or more tasks determined by control processor 140 [act 230]. Such execution may begin shortly after loading the instructions, perhaps after minor configurations (e.g., where to retrieve data in memory 120) are made to low-level processors 150. As part of act 230, or an earlier act, control processor 140 or low-level processors 150 may program DMA 160 to deliver and accept data to and from low-level processors 150 during their processing tasks. Although a single low-level processor 150 may perform one computing task, in some implementations two or more low-level processors 150 may cooperate to perform one task. Also, low-level processors 150 may perform their respective task(s) or portions of such task(s) in parallel in some implementations.

Low-level processors 150 may transfer data to and from memory 120 via DMA 160 as appropriate for their respective processing task(s) [act 240]. When such processing is complete, the processed data may be transferred to memory 120 for buffering and/or transfer to destination 170.

Acts 210-240 may be repeated as appropriate for successive computing tasks. As described above, control processor 140 may perform and/or coordinate acts 210 and 220, and low-level processors 150 may perform and/or coordinate acts 230 and 240. Repetition of acts 210-240 may depend on when indicator data is received by memory 120. If, for example, the next piece of indicator data (e.g., indicating the next task or set of tasks) is not received until after low-level processors 150 have processed the data, control processor 140 may not repeat act 210 until after act 240, as illustrated by the solid arrow in Fig. 2.

If the next piece of indicator data is received before low-level processors 150 have processed the data, however, control processor 140 may repeat act 210 after act 220, as illustrated by the dashed arrow in Fig. 2. In such scenarios, if new indicator data is available, control processor 140 may finish loading instructions into some of low-level processors 150, and it may determine tasks and load instructions in acts 210 and 220 while the low-level processors 150 are executing in acts 230 and 240. Other processing flows between control processor 140 and low-level processors 150 are possible consistent with the description herein.

A specific example to aid in understanding system 100 and process 200 will now be presented. Although system 100 and process 200 may be amenable to decoding video information, as described below, the claimed invention should not be limited thereto. Further, system 100 and process 200 may be amenable to much more complicated algorithms, whether video decoding or other types, than are discussed below.

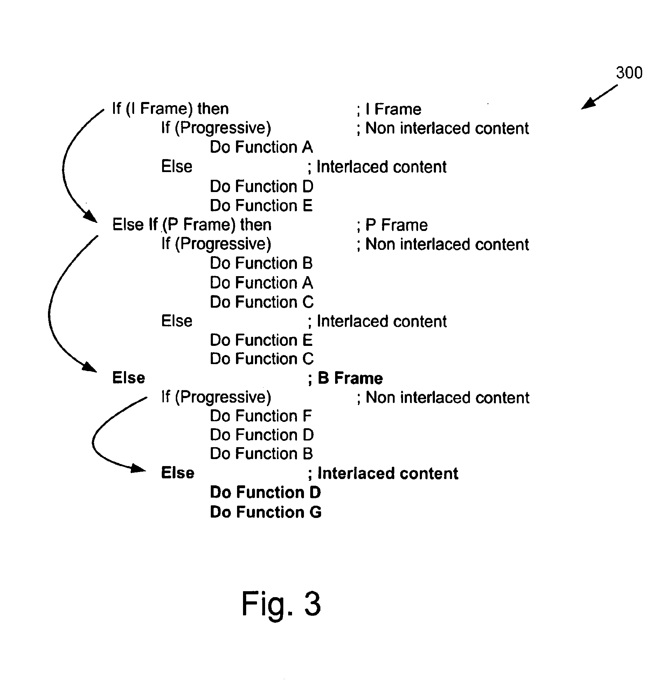

Fig. 3 illustrates an example video processing algorithm 300. Algorithm 300 may perform one or more of Functions A-G to decode a frame of video information, depending on whether the frame is an intracoded (I) picture, a predicted (P) picture, or a bi-directionally predicted (B) picture, and depending on whether the particular I, P, or B picture includes interlaced or progressively scanned video information. This type of frame (e.g., B frame) and mode of video (e.g., interlaced) information may be one example of indicator data, because it indicates what processing tasks should be performed on the remainder of the video data in the frame.

Assuming, for the sake of example, receipt of a B frame that is interlaced, algorithm 300 determines that Functions D and G be performed to decode such a frame of video information. The arrows in Fig. 3 illustrate the logical steps taken to make a determination of which functions to perform. Functions D and G may represent to distinct computational tasks necessary to decode an interlaced B frame of video data. Of course, there may be more or less tasks than two that are necessary to decode such a frame of video information, and the two shown are purely for the purposes of illustration and explanation.

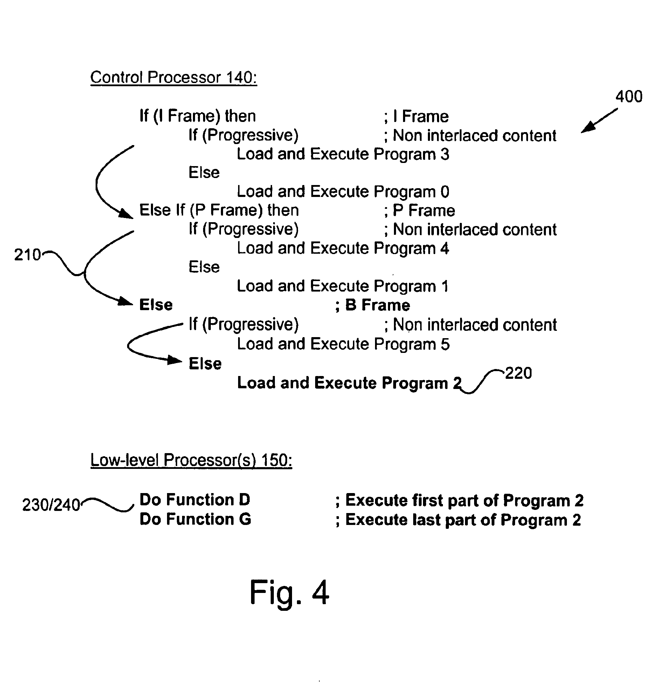

Fig. 4 illustrates how the system 100 may implement the algorithm 300, which is designated as algorithm 400 to indicate the different implementation. For comparison purposes, it will also be assumed that the video information to be processed is a B frame that is interlaced. As shown, control processor 140 may step through the logical portions of algorithm 400 [act 210] to determine what task(s) should be performed for an interlaced, B-type frame of data.

Control processor 140 may then load Program 2 [act 220] into one or more of low-level processors 150 and cause it to be executed. Based on the complexity of Program 2, control processor 140 may load corresponding instructions into a single one of low-level processors 150 or into multiple ones of low-level processors 150. Control processor 140 may determine whether to distribute Program 2 over multiple low-level processors 150, or such may be pre-determined and reflected in, for example, how Program 2 is stored in memory 120. Once control processor 140 has loaded Program 2, it may perform acts 21 and 220 again if the indicator data (e.g., frame type and/or mode) is available for another frame of video data.

Low-level processor(s) 150 may then perform Functions D and G, the first and second parts of program 2 [acts 230/240]. In some implementations, one low-level processor (e.g., 150-1) may perform both of Functions D and G. In some implementations, one low-level processor (e.g., 150-1) may perform Function D, and one low-level processor (e.g., 150-2) may perform Function G. In some implementations, two or more low-level processors 150 may cooperate to perform at least one of Functions D and G, such as Function G. Other implementations are possible consistent with the description herein.

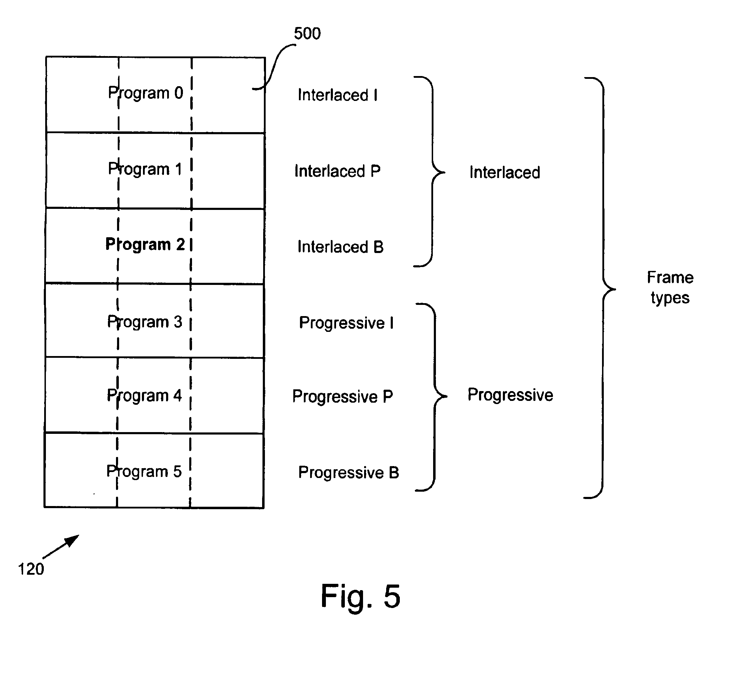

Fig. 5 illustrates how Programs 0-5 may be stored in memory 120. Structure 500 may include a data structure such as a linked list, an array, etc. within memory 120. Programs 0-5 may reside at certain addresses in structure 500, notionally illustrated by rows within the structure. In some implementations, the same version of a program (e.g., Program 2) is executed by any of low-level processors 150.

The dotted lines defining columns within structure 500 denote the possibility of different treatment of a program (e.g., Program 2) for different ones of low-level processors 150.
In some implementations, for example, a program (e.g., Program 2) may be split into a number of portions (e.g., three in Fig. 5, although this should not limit the claimed invention) for different low-level processors (e.g., 150-1 to 150-3) to execute. For example, a first part of Program 2 may be instructions to perform Function D, and a second (and possible third) portion of Program 2 may be instructions to perform Function G. In some implementations, different ones of low-level processors 150 may load subtly different versions of a program (e.g., Program 2 or a portion thereof) to aid in addressing, data transfer, etc.

The division of highly-complex tasks from computationally-intensive tasks described herein permits system 100 to include a possibly lower-performance (e.g., lower power) control processor 140 that can handle the logical complexity of an algorithm and many lower-complexity (e.g., smaller and/or lower power) low-level processors 150 to handle the computational load of the algorithm. Using such a scheme, system 100 may consume less power than would be otherwise possible for the same computational operation (e.g., video decoding). Both high performance and low power usage may be obtained by system 100, because in video decompression, for example, the indicator data (e.g., detailed information about what processing tasks will be upcoming) is transmitted ahead of the other data. Using such indicator data, control processor 140 may customize and/or reconfigure the remainder of data processor 130 on the fly to perform just that upcoming task.

The foregoing description of one or more implementations consistent with the principles of the invention provides illustration and description, but is not intended to be exhaustive or to limit the scope of the invention to the precise form disclosed. Modifications and variations are possible in light of the above teachings or may be acquired from practice of various implementations of the invention.

For example, the hierarchical processing scheme described herein is not limited to video data. Rather, it may be applied to any data for which indicator data (e.g., data which indicates a future processing task) is available with which to configure low-level processors 150, or another processor or logic that is programmable on the fly. Also, although shown as a unitary device, in some implementations memory 120 may include multiple devices. For example, the data to be processed may be stored in a relatively large RAM, while the instructions for low-level processors 150 may be stored in a smaller RAM, a dedicated read-only memory (ROM), or some other separate storage device.

Further, although control processor 140 handled the algorithmic complexity and low-level processors 150 handled the data processing, such rigid separation of complexity and processing need not always occur. For example, control processor 140 may, in some instances, process data, and low-level processors 150 may, in some instances, handle limited logical parsing and/or decision making. In such hybrid schemes, however, it mat still be desirable for low-level processors 150 to process as much data as practical and for control processor 140 to handle as much of the algorithmic complexity as practical. Also, although decoding of video information has been described as one implementation, other functions are possible in other implementations. For example, system 100 may be arranged to encode media information, to render media information, to model physical phenomena, or to perform other, relatively complex numerical operations that may involve processing a large amount of data.

Moreover, the acts in Fig. 2 need not be implemented in the order shown; nor do all of the acts necessarily need to be performed. Also, those acts that are not dependent on other acts may be performed in parallel with the other acts. Further, at least some of the acts in this figure may be implemented as instructions, or groups of instructions, implemented in a machine-readable medium.

No element, act, or instruction used in the description of the present application should be construed as critical or essential to the invention unless explicitly described as such. Also, as used herein, the article "a" is intended to include one or more items. Where only one item is intended, the term "one" or similar language is used. Variations and modifications may be made to the above-described implementation(s) of the claimed invention without departing substantially from the principles of the invention. All such modifications and variations are intended to be included herein within the scope of this disclosure and protected by the following claims.

## Claims

1. A system (100) for decoding video information, the system being adaptable in dependance on type information that describes frames of video information, **characterised by** comprising:
a memory (120) to store frames of video information, type information that describes the frames of video information, and instructions for decoding the frames of video information;
a plurality of processors (150) each including an instruction memory to store certain instructions for decoding frames of video information, each processor (150) of said plurality of processors (150) being arranged to execute the certain instructions stored in the instruction memory to decode a frame of the video information;
a control processor (140) to determine a subset of the instructions needed to process a particular frame of the video information from the type information that describes the particular frame and to cause the subset of the instructions to be stored in the instruction memory of at least one of the plurality of processors (150) for execution thereby.

2. The system of claim 1, wherein the instruction memory of each processor (150) of said plurality of processors (150) is a first size, and
wherein the control processor (140) includes an instruction memory of a second size that is at least ten times the first size.

3. The system of claim 1, further comprising:
a direct memory access device (160) connected to the memory, the plurality of processors (150), and the control processor (140) to coordinate transfer of frames of video information, the type information, and the instructions.

4. The system of claim 1, wherein the type information includes first information indicating a frame type of the video information or second information indicating a scan type of the video information.

5. A method of decoding video information in a system being adaptable in dependance on type information that describes frames of video information, **characterised by**, comprising:
determining, by a control processor (140), a subset of instructions stored in a memory (120) needed to process a particular frame of video information based upon type information stored in the memory that describes the particular frame, and storing the subset of instructions in an instruction memory of at least one of a plurality of processors (150);
executing, by the at least one of the plurality of processors (150), the subset of instructions stored in the instruction memory to decode the frame of the video information.

6. The method of claim 5, wherein the type information includes at least a frame type of the video information.

7. The method of claim 5, wherein type information includes at least a display mode of the video information.

8. The method of claim 5, further comprising:
determining from the type information, by the control processor (140) and after said storing, another decoding task to be performed; and
storing second instructions to perform another decoding task in an instruction memory within one of the plurality of processors (150).

9. The method of claim 8, further comprising:
executing, by one of the plurality of processors (150), the second instructions in the instruction memory to decode another frame of video information.

## Patentansprüche

1. System (100) zum Decodieren von Videoinformationen, wobei das System anpassbar ist abhängig von Gattungsinformationen, welche Frames von Videoinformationen beschreiben, **dadurchgekennzeichnet, dass** das System folgendes umfasst:
einen Speicher (120) zum Speichern von Frames von Videoinformationen, Gattungsinformationen, welche die Frames von Videoinformationen beschreiben, und Befehlen zum Decodieren der Frames von Videoinformationen;
eine Mehrzahl von Prozessoren (150), die jeweils einen Befehlsspeicher zum Speichern bestimmter Befehle zum Decodieren von Frames von Videoinformationen aufweisen, wobei jeder Prozessor (150) der genannten Mehrzahl von Prozessoren (150) so angeordnet ist, dass die bestimmten Anweisungen ausgeführt werden, die in dem Befehlsspeicher gespeichert sind, um einen Frame der Videoinformationen zu decodieren;
einen Steuerungsprozessor (140) zum Bestimmen einer Teilmenge der Befehle, die benötigt werden zum Verarbeiten eines bestimmten Frames der Videoinformationen, anhand der Gattungsinformationen, welche den bestimmten Frame beschreiben, und um zu bewirken, dass die Teilmenge der Befehle in dem Befehlsspeicher mindestens eines Prozessors der Mehrzahl von Prozessoren (150) zur Ausführung dadurchgespeichert wird.

2. System nach Anspruch 1, wobei der Befehlsspeicher jedes Prozessors (150) der genannten Mehrzahl von Prozessoren (150) eine erste Größe aufweist; und
wobei der Steuerungsprozessor (140) einen Befehlsspeicher einer zweiten Größe aufweist, der mindestens zehnmal so groß ist wie die erste Größe.

3. System nach Anspruch 1, wobei das System ferner folgendes umfasst:
eine Vorrichtung für direkten Speicherzugriff (DMA) (160), die mit dem Speicher, der Mehrzahl von Prozessoren (150) und dem Steuerungsprozessor (140) verbundenist, um die Übertragung von Frames von Videoinformationen, der Gattungsinformationen und der Befehle zu koordinieren.

4. System nach Anspruch 1, wobei die Gattungsinformationen erste Informationen aufweisen, welche eine Frame-Art der Videoinformationen anzeigen, oder zweite Informationen, welche eine Abtastart der Videoinformationen anzeigen.

5. Verfahren zum Decodieren von Videoinformationen in einem System, das anpassbar ist abhängig von Gattungsinformationen, welche Frames von Videoinformationen beschreiben, wobei das Verfahren **gekennzeichnet ist durch**:
das Bestimmen **durch** einen Steuerungsprozessor (140) einer Teilmenge von Befehlen, die in einem Speicher (120) gespeichert sind, für die Verarbeitung eines bestimmten Frames von Videoinformationen auf der Basis der in dem Speicher gespeicherten Gattungsinformationen, welche den jeweiligen Frame beschreiben, und wobei die Teilmenge von Befehlen in einem Befehlsspeicher mindestens einen Prozessors einer Mehrzahl von Prozessoren (150) gespeichert wird;
das Ausführen **durch** den mindestens einen Prozessor der Mehrzahl von Prozessoren (150) der Teilmenge von Befehlen, die in dem Befehlsspeicher gespeichert sind, so dass der Frame der Videoinformationen decodiert wird.

6. Verfahren nach Anspruch 5, wobei die Gattungsinformationen mindestens eine Frame-Art der Videoinformationen aufweisen.

7. Verfahren nach Anspruch 5, wobei die Gattungsinformationen mindestens einen Anzeigemodus der Videoinformationen aufweisen.

8. Verfahren nach Anspruch 5, wobei das Verfahren ferner folgendes umfasst:
das Bestimmen anhand der Gattungsinformationen durch den Steuerungsprozessor (140) und nach dem genannten Speichern einer weiteren auszuführenden Decodierungsaufgabe; und
das Speichern zweiter Befehle zum Ausführen einer weiteren Decodierungsaufgabe in einem Befehlsspeicher in einem Prozessor der Mehrzahl von Prozessoren (150).

9. Verfahren nach Anspruch 8, wobei das Verfahren ferner folgendes umfasst:
das Ausführen durch einen Prozessor der Mehrzahl von Prozessoren (150) der zweiten Befehle in dem Befehlsspeicher zum Decodieren eines anderen Frames von Videoinformationen.

## Revendications

1. Système (100) pour décoder des informations vidéo, le système étant adaptable en fonction d'informationsde type qui décrivent des trames d'informations vidéo, **caractérisé en ce qu'**il comprend :
une mémoire (120) pour stocker des trames d'informations vidéo, des informations de type qui décrivent les trames d'informations vidéo et des instructions pour décoder les trames d'informations vidéo ;
une pluralité de processeurs (150) chacun comprenant une mémoire d'instructions pour stocker certaines instructions pour décoder des trames d'informations vidéo, chaque processeur (150) de ladite pluralité de processeurs (150) étant agencé pour exécuter certaines instructions stockées dans la mémoire d'instructions pour décoder une trame des informationsvidéo ;
un processeur de commande (140) pour déterminer un sous-ensemble des instructions nécessaires pour traiter une trame donnée des informationsvidéo à partir des informationsde type qui décrivent la trame particulière et pour amener le sous-ensemble des instructions à être stocké dans la mémoire d'instructions d'au moins l'un de la pluralité de processeurs (150) pour une exécution par celui-ci.

2. Système selon la revendication1, dans lequel la mémoire d'instructions de chaque processeur (150) de ladite pluralité de processeurs (150) est d'une première taille, et
dans lequel le processeur de commande (140) comprend une mémoire d'instructions d'une seconde taille qui est au moins dix fois plus grande que la première taille.

3. Système selon la revendication1, comprenant en outre :
un dispositif à accès direct à la mémoire (160) connecté à la mémoire, à la pluralité de processeurs (150) et au processeur de commande (140) pour coordonnerle transfert de trames d'informations vidéo, d'informationsde type et d'instructions.

4. Système selon la revendication1, dans lequel les informations de type comprennent des premières informations indiquant un type de trame des informationsvidéo ou des secondesinformations indiquant un type de balayage des informations vidéo.

5. Procédé de décodage d'informations vidéo dans un système adaptable en fonction d'informationsde type qui décrivent des trames d'informations vidéo, comprenant les étapes consistant à :
déterminer, par un processeur de commande (140), un sous-ensemble d'instructions stockées dans une mémoire (120) nécessaires pour traiter une trame donnée d'informations vidéo sur la base des informations de type stockées dans la mémoire qui décrivent la trame donnée et stocker le sous-ensemble d'instructions dans une mémoire d'instructions d'au moins l'un d'une pluralité de processeurs (150) ;
exécuter, par au moins l'un de la pluralité de processeurs (150), le sous-ensemble d'instructions stockées dans la mémoire d'instructions pour décoder la trame des informationsvidéo.

6. Procédé selon la revendication5, dans lequel les informationsde type incluent au moins un type de trame des informationsvidéo.

7. Procédé selon la revendication5, dans lequel les informationsde type incluent au moins un mode affichage des informationsvidéo.

8. Procédé selon la revendication5, comprenant en outre les étapes consistant à :
déterminer à partir des informationsde type, par le processeur de commande (140) et après ledit stockage, une autre tâche de décodage devant être effectuée ; et
stocker des secondesinstructions pour effectuer une autre tâche de décodage dans une mémoire d'instructions dans l'une de la pluralité de processeurs (150).

9. Procédé selon la revendication8, comprenant en outre l'étape consistant à :
exécuter, par l'un d'une pluralité de processeurs (150), les secondesinstructions dans la mémoire d'instructions pour décoder une autre trame d'informations vidéo.
